# EUROPEAN PATENT APPLICATION

(11) **EP 3 098 920 A1**
(43) Date of publication of application: **30.11.2016**
(21) Application number: 16171031.4
(22) Date of filing: 24.05.2016
(51) Int. Cl.: H02G 15/184

(54) **SHRINKABLE MULTILAYER TUBE**

(30) Priority: 26.05.2015 FI 20155390
(71) Applicant: Ensto Finland Oy, 06100 Porvoo (FI)
(72) Inventor: Aarnio, Anssi, 06100 Porvoo (FI); Alkila, Kauko, 06100 Porvoo (FI); Väkeväinen, Kenneth, 06100 Porvoo (FI)
(74) Representative: Papula Oy

(57) **Abstract**

A shrinkable multilayer tube (1) for electrically connecting or terminating cables and a method for the production thereof are disclosed. The multilayer tube (1) comprises a conducting outer layer (2), an insulating inner layer (3) arranged concentrically within the conducting outer layer and an innermost layer (4) arranged concentrically within the insulating layer (3), wherein the innermost (4) layer is formed of a stress controlling material.

## Description

### FIELD OF THE INVENTION

The invention relates to a shrinkable multilayer tube for electrically connecting or terminating cables, a method for the production thereof and a cable connector assembly.

### BACKGROUND

Shrinkable sleeves and tubes of suitable materials are used in cable terminations and cable joints. They may be shrunk into position around ends of cables that have been electrically connected together. Such shrinkable sleeves or tubes typically comprise at least an insulating layer.

As such a sleeve or tube is installed over a cable termination or a cable joint, an electrical interface is created between the sleeve or tube and the cable. Cables are typically provided with a cable sheath, wherein a portion of the cable sheath has to be removed when the cable is to be connected to the cable termination or to the cable joint. The cable may also comprise other layers over the conductor, which may be removed for the installation. The edge of the cable sheath forms a shield discontinuity, wherein in the high or medium voltage cables the cable joint or the cable termination generates an area of enhanced electric field around the cable conductor. This enhanced electric field may be attenuated to minimize the risk of discharges. The attenuation of this enhanced electric field is called stress controlling (also field control or field grading).

For attenuating the local peak of the electric field, means such as covering the cable joint with a stress controlling material such as a stress controlling mastic or installing several shrinkable sleeves or tubes on top of each other have been developed. Such means, however, may require additional steps when installing the cable joint or termination and may also entail the risk of a step or component being accidentally omitted.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

An improved shrinkable multilayer tube is disclosed, further providing a shrinkable multilayer tube for electrically connecting or terminating cables and a method for the production thereof. The multilayer tube comprises a conducting outer layer, an insulating inner layer arranged concentrically within the conducting outer layer and an innermost layer arranged concentrically within the insulating layer, wherein the innermost layer is formed of a stress controlling material.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is a cross-sectional view of a shrinkable multilayer tube according to one embodiment;
Fig. 2 is a cross sectional view of a cable, illustrating an electric field; and
Fig. 3 is a cross-sectional view of the connector assembly with a graph illustrating electric field strength inside the connector assembly.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

A shrinkable multilayer tube for electrically connecting or terminating cables comprises a conducting outer layer; an insulating inner layer arranged concentrically within the conducting outer layer; and an innermost layer arranged concentrically within the insulating layer. The innermost layer is formed of a stress controlling material.

The conducting outer layer is thus arranged around the insulating inner layer, and the insulating inner layer is arranged around the innermost layer.

The presence of further layers in the shrinkable multilayer tube is in principle not excluded. However, the shrinkable multilayer tube may also consist of the conducting outer layer, the insulating inner layer and the innermost layer.

The conducting outer layer, the insulating inner layer and the innermost layer may be layers of polymeric material. The conducting outer layer, the insulating inner layer and the innermost layer may be extruded, such as coextruded, layers. The conducting outer layer, the insulating inner layer and the innermost layer may also be cross-linked layers of polymeric material.

The tube may be obtainable by coextrusion of the conducting outer layer, the insulating inner layer and the innermost layer into a multilayer structure. The tube may also be obtainable by molding or injection molding the conducting outer layer, the insulating inner layer and the innermost layer into a multilayer structure.

The shrinkable multilayer tube may be heat shrinkable or cold shrinkable. The material of the conducting outer layer, the material of the insulating inner layer or both may be heat shrinkable or cold shrinkable. The shrinkable multilayer tube may have a shrink ratio of 2:1 to 6:1, or 3:1 to 4:1, calculated as the ratio of the internal diameter of the tube as expanded to the internal diameter of the tube when shrunk, i.e. recovered.

The materials of the conducting outer layer, the insulating inner layer and the innermost layer may be selected so that they can be successfully coextruded and exhibit compatible shrinkability properties.

In this context, the term "coextrusion" should be understood as referring to a process wherein the materials of the layers are pressed through the same die to produce a single piece in which the layers are adhered together. The materials may be coextruded by delivering steady volumetric throughput of the materials to the single die.

The polymeric material or materials of one or more of the layers may be cross-linked. The cross-linking may be e.g. chemical cross-linking or cross-linking by radiation, depending on the material or materials of the layer or layers. One or more layers may also be cross-linked to each other, for instance the conducting outer layer may be cross-linked to the insulating inner layer and/or the insulating inner layer cross-linked to the innermost layer.

The conducting outer layer may comprise a thermoplastic material. Suitable thermoplastic materials may include e.g. polyolefins. Examples of polyolefins are ethylene homopolymers and ethylene copolymers, such as linear low-density polyethylene (LLDPE), very low-density polyethylene (VLDPE), low-density polyethylene (LDPE), medium-density polyethylene (MDPE), high-density polyethylene (HDPE), copolymers of ethylene and vinyl acetate (EVA), polypropylene (PP) and polymethylpentene (PMP).

The conducting outer layer may also comprise a mixture or blend of a termoplastic material or other polymeric material and a conducting material, such as conductive carbon black, carbon fibers, graphites, graphenes, fullerenes, or carbon nanotubes for increasing the conductivity of the material. An example of such a thermoplastic material is a blend or copolymer of a polyethylene, vinyl acetate and conducting carbon black. The conducting material is then included in the thermoplastic material in an amount that renders the material of the conducting outer layer electrically conducting. For instance, the thermoplastic material may comprise up to 30% (w/w), or up to 20% (w/w), or up to 10% (w/w), or up to 5% (w/w) of a conductive material. The conducting outer layer may have a volume resistivity of less than 100 Ω•cm. Such an outer layer is electrically conducting. The mixture may also comprise one or more other components. The one or more other components may include one or more other polymers to increase the softness, flexibility, toughness, shrinkage and/or to reduce the thermal conductivity of the stress controlling material. The one or more other components may further comprise a crosslinking agent, a photoinitiator and/or a photosen-sitiser.

In the context of this specification, the term "conductive material" should be understood as referring to a material having electrically conductive properties. Conductive materials typically have very low volume resistivities, such as a volume resistivity of less than 100 Ω•cm, or less than 10 Ω•cm, or less than 1 Ω•cm.

The insulating inner layer may also comprise or consist of a thermoplastic material, including any thermoplastic materials described in this specification. An example of such a thermoplastic material is a blend or copolymer of a polyethylene, vinyl acetate, and optionally one or more other components, such as a filler for improving the mechanical properties of the insulating inner layer, a cross-linking agent, and/or a colouring agent. The one or more other components may also include one or more other polymers to increase the softness, flexibility, toughness, shrinkage and/or to reduce the thermal conductivity of the stress controlling material. The one or more other components may further comprise a crosslinking agent, a photoinitiator and/or a photosen-sitiser. The insulating inner layer may have a volume resistivity above 10¹² Ω•cm. Such an inner layer is electrically insulating.

In the context of this specification, the term "stress controlling material" should be understood as referring to a material capable of attenuating a local concentration of the electric field formed at a cable joint or termination.

As the innermost layer has a stress controlling effect, any adverse effects of omitting other stress controlling material such as a stress controlling mastic from the cable joint or termination may be mitigated or even eliminated.

The stress controlling material may be elastic. Thus it may elastically follow the cable joint or termination and press against the cable joint or termination, thereby improving the quality of the electrical interface between the tube and the cable.

The stress controlling material may comprise or consist of a polymeric material. In the context of this specification, the term "polymeric material" refers to a material obtainable from a composition based on one or more polymers. The polymeric material may be suitable for being formed by extrusion, molding or injection molding. The polymeric material may also be crosslinkable.

The stress controlling material may comprise an elastomer. In the context of this specification, the term "elastomer" should be understood as referring to a natural or synthetic material that has the chemico-physical properties of natural rubber, such as the ability to undergo major elastic deformations upon stress and to return to their original dimensions when the stress is released.

The stress controlling material may comprise a thermoplastic elastomer. Thermoplastic elastomers are elastic and may be formed into a desired shape using techniques suitable for thermoplastic materials, such as injection moulding and extrusion. Soft materials that compress the underneath layer may have better contact to the underneath layer. In addition, less air may be trapped between the thermoplastic elastomer layer and underneath layer. Air can cause partial discharges, and is preferably avoided in joints. Further, thermoplastic elastomers, as opposed to thermoset elastomers, may be melted and reprocessed several times. Thermoplastic elastomers may also be cross-linked without a need for high temperatures, which might adversely alter other properties of the multilayer tube. As thermoplastic elastomers may be coextruded with the materials of the conducting outer layer and the insulating inner layer, a good contact without boundaries and impurities between the layers may be obtained, and an electrically more durable structure may thereby be obtained. Thermoplastic elastomers can be processed using conventional processing techniques (extrusion, injection moulded). Because thermoplastic elastomers can be i.e. coextruded, there is no need for two process steps usually required for making elastomer-thermoplastic material contact.

Thermoplastic elastomers may be considered to include e.g. thermoplastic polyolefins (olefinic thermoplastic elastomers, TPO or TPE-o), styrenic block copolymers (TPE-s), elastomeric alloys (thermoplastic vulcanizates, TPE-v or TPV), thermoplastic polyurethanes (TPU), thermoplastic copolyesters, thermoplastic polyamides, reactor TPO's (R-TPO), polyolefin plastomers (POP), polyolefin elastomers (POE) or any mixtures thereof.

The stress controlling material may comprise a thermoplastic polyolefin, also referred to as olefinic thermoplastic elastomers. Thermoplastic elastomer stress control material may adapt and adjust contacts to the underneath surface better than thermoplastic material, since there is constant compression force that compresses the underneath layer. In addition thermoplastic elastomeric materials may be softer than thermoplastic materials, and therefore may adapt to the underneath surface better than harder materials. Softness of thermoplastic elastomer may be in the range of Shore A 10- Shore A 90. Olefinic thermoplastic elastomers are blends, i.e. two-component systems consisting of an elastomer (such as ethylene propylene diene monomer rubber, EPDM) finely dispersed in a thermoplastic (co)polymer, such as a polypropylene or a polyethylene. The thermoplastic (co)polymer may be the major component and may also be the continuous phase. Olefinic thermoplastic elastomers may comprise at least 20% (w/w) of elastomer in a thermoplastic polymer.

Thermoplastic vulcanizates are thermoplastic elastomers which have undergone cross-linking. TPVs are elastic and resistant to heat and fatigue.

The stress controlling material may comprise a thermoplastic elastomer material selected from the group consisting of thermoplastic polyolefins and thermoplastic vulcanizates.

The stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm. The volume resistivity may depend e.g. on the voltage of the cable to be connected using the shrinkable multilayer tube.

The stress controlling material may have a relative permittivity of about 18 to about 40, or of about 20 to about 30.

The stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm and a relative permittivity of about 18 to about 40.

The stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm and a relative permittivity of about 20 to about 30.

The stress controlling material may be capable of stress controlling capacitively or resistively; however, the stress controlling mechanism of the material is not particularly limited to these mechanisms. Such materials may comprise or consist of an active agent embedded in a matrix material, such as a thermoplastic elastomer material.

Capacitive stress controlling materials are e.g. materials that have a high relative permittivity. Such materials are capable of reducing the electrical stress surrounding joints or terminations. Capacitive stress controlling materials may be provided using a variety of compositions. A capacitive stress controlling material may have a relative permittivity of about 18 to about 40, or of about 20 to about 30 and/or a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm.

Capacitive stress controlling materials may comprise e.g. one or more components selected from the group consisting of carbon black, barium titanate, epihalohydrin polymers, ceramics that have high relative permittivity (e.g. above 4), nanoclays, conductive platelets, carbon fibers, graphites, graphenes, fullerenes, carbon nanotubes, and thermoplastic elastomers having high relative permittivity (e.g. above 4).

Capacitive stress controlling materials may comprise or consist of a mixture comprising a thermoplastic elastomer and one or more other components, such as one or more components selected from the group consisting of carbon black, barium titanate, epihalohydrin polymers, ceramics that have high relative permittivity (e.g. above 4), nanoclays, conductive platelets, carbon fibers, graphites, graphenes, fullerenes, carbon nanotubes, and thermoplastic elastomers having high relative permittivity (e.g. above 4).

Such a mixture may comprise e.g. 10 to 25 % (v/v) of carbon black. Examples of suitable compositions for the mixture are described e.g. in the Examples of EP 0522760. Properties such as volume resistivity of a stress controlling material comprising carbon black (and other materials having similar properties) do not vary linearly in relation to the relative amount of carbon black due to the phenomenon known as percolation. A stress controlling material comprising or consisting of a mixture comprising a thermoplastic elastomer and carbon black should exhibit suitable percolation properties, thereby providing suitable stress controlling. A skilled person is capable of selecting a mixture having suitable percolation properties.

Epihalohydrin polymers suitable for use in the stress controlling materials are the elastomeric polymers of an epihalohydrin in homopolymer or copolymer form. Such polymers are prepared by polymerization of the monomeric material in mass or in solution with organometallic catalysts, and may be homopolymers, copolymers, terpolymers, etc. Examples of homopolymers include epichlorohydrin, or epibromohydrin; examples of copolymers include copolymers of epihalohydrins with alkylene oxides, and copolymers with epoxides, e.g. propylene oxide, ethylene oxide, butene oxide, and epoxy ethers such as ethylglycidyl ether and allylglycidyl ether.

The conductive platelets may be metal platelets or flakes, such as aluminum platelets.

Resistive stress controlling materials are e.g. materials that have highly nonlinear, voltage controlled electrical transport properties. When the electrical stress reaches the threshold voltage of the material, the conductivity of the material increases similar to voltage-dependent resistor or varistor, thereby limiting high electrical stress. The resistive stress control material may comprise microvaristors, small particles that enable current through the material when it applied to sufficient voltage. The microvaristors form a conducting path, allowing reducing the effect of the electric field inside the connector assembly. Resistive stress controlling materials may also be provided using a variety of compositions. A resistive stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm.

Resistive stress controlling materials may comprise e.g. one or more components selected from the group consisting of microvaristors, zinc oxide or other semiconductor materials of a metallic oxide material, and silicon carbide or other semiconductive ceramics.

Resistive stress controlling materials may comprise or consist of a mixture comprising a thermoplastic elastomer and one or more other components, such as one or more components selected from the group consisting of microvaristors, zinc oxide or other semiconductor materials of a metallic oxide material, and silicon carbide or other semiconductive ceramics.

The stress controlling material may thus comprise or consist of a mixture containing a thermoplastic elastomer and one or more other components. In such a mixture, the one or more other components are dispersed in the thermoplastic elastomer. The mixture may be a polymeric mixture. The one or more other components may comprise e.g. one or more components selected from the group consisting of carbon black, barium titanate, epihalohydrin polymers, chlorinated polyethylene, ceramics that have high relative permittivity (e.g. above 4), nanoclays, conductive platelets, carbon fibers, graphites, graphenes, fullerenes, carbon nanotubes, and thermoplastic elastomers having high relative permittivity (e.g. above 4) and/or one or more components selected from the group consisting of microvaristors, zinc oxide or other semiconductor materials of a metallic oxide material, and silicon carbide or other semiconductive ceramics. The one or more other components may also include one or more other polymers to increase the softness, flexibility, toughness, higher shrinkage and/or lower thermal conductivity of the stress controlling material, such as chlorinated polyethylene. The one or more other components may further comprise a crosslinking agent, a photoinitiator, a photosensitizer, a UV resistance agent, a light stabilizer agent, and/or a processing aid.

Starting from a thermoplastic elastomer, such as TPE, TPO or TPV, a skilled person is capable of forming a suitable mixture by adding one or more other components, until suitable properties of the stress controlling material, such as volume resistivity, relative permittivity, percolation and/or mechanical properties, are obtained.

The shrinkable multilayer tube may relate to a cable connector assembly for electrically connecting cables comprising a shrinkable multilayer tube according to one or more embodiments described in this specification. The multilayer tube may also relate to cable termination assembly or an arrangement comprising a medium to high voltage cable assembly, installation assembly or any elongated medium to high voltage component wherein the electric field must be controlled to avoid arcing.

The cable connector assembly may be a cable joint assembly or a cable termination assembly. The cable connector assembly may further comprise a joint. In the context of this specification, the term "joint" refers to an elongate electrical element, inside which two electrical cables are positioned so that their electrical conductors make contact.

A method for producing the shrinkable multilayer tube according to one or more embodiments described in this specification is disclosed, wherein the method comprises coextruding a conducting outer layer, an insulating inner layer and an innermost layer of a stress controlling material into a multilayer tube, wherein arranging the insulating inner layer concentrically within the conducting outer layer and the innermost layer concentrically within the insulating inner layer.

The method may comprise continuously or semi-continuously coextruding the conducting outer layer, the insulating inner layer and the innermost layer of a stress controlling material into a multilayer tube.

The shrinkable multilayer tube may be heat shrinkable or cold shrinkable. The material of the conducting outer layer, the material of the insulating inner layer or both may be heat shrinkable or cold shrinkable. The shrinkable multilayer tube may have a shrink ratio of 2:1 to 6:1, or 3:1 to 4:1, calculated as the ratio of the internal diameter of the tube as expanded to the internal diameter of the tube when shrunk, i.e. recovered.

The materials of the conducting outer layer, the insulating inner layer and the innermost layer may be selected so that they can be successfully coextruded and exhibit compatible shrinkability properties.

In this context, the term "coextrusion" should be understood as referring to a process wherein the materials of the layers are pressed through the same die to produce a single piece in which the layers are adhered together. The materials may be coextruded by delivering steady volumetric throughput of the materials to the single die.

One or more of the layers, such as the innermost layer, may comprise or consist of a polymeric material. The method may thus further comprise cross-linking the polymeric material of one or more of the layers. The cross-linking may be e.g. chemical cross-linking or cross-linking by radiation. The cross-linking may also result in cross-linking one or more layers to each other, for instance cross-linking the conducting outer layer to the insulating inner layer and/or the insulating inner layer to the innermost layer.

The conducting outer layer may comprise a thermoplastic material. Suitable thermoplastic materials may include e.g. polyolefins. Examples of polyolefins are ethylene homopolymers and ethylene copolymers, such as linear low-density polyethylene (LLDPE), very low-density polyethylene (VLDPE), low-density polyethylene (LDPE), medium-density polyethylene (MDPE), high-density polyethylene (HDPE), copolymers of ethylene and vinyl acetate (EVA), polypropylene (PP) and polymethylpentene (PMP).

The conducting outer layer may also comprise a mixture or blend of a termoplastic material or other polymeric material and a conducting material, such as conductive carbon black, carbon fibers, graphites, graphenes, fullerenes, or carbon nanotubes for increasing the conductivity of the material. An example of such a thermoplastic material is a blend or copolymer of a polyethylene, vinyl acetate and conducting carbon black. The conducting material is then included in the thermoplastic material in an amount that renders the material of the conducting outer layer electrically conducting. For instance, the thermoplastic material may comprise up to 30% (w/w), or up to 20% (w/w), or up to 10% (w/w), or up to 5% (w/w) of a conductive material. The conducting outer layer may have a volume resistivity of less than 100 Ω·cm. Such an outer layer is electrically conducting. The mixture may also comprise one or more other components. The one or more other components may include one or more other polymers to increase the softness, flexibility, toughness, shrinkage and/or to reduce the thermal conductivity of the stress controlling material. The one or more other components may further comprise a crosslinking agent, a photoinitiator and/or a photosen-sitiser.

The insulating inner layer may also comprise or consist of a thermoplastic material, including any thermoplastic materials described in this specification. An example of such a thermoplastic material is a blend or copolymer of a polyethylene, vinyl acetate, and optionally one or more other components, such as a filler for improving the mechanical properties of the insulating inner layer, a cross-linking agent, and/or a colouring agent. The one or more other components may also include one or more other polymers to increase the softness, flexibility, toughness, shrinkage and/or to reduce the thermal conductivity of the stress controlling material. The one or more other components may further comprise a crosslinking agent, a photoinitiator and/or a photosen-sitiser. The insulating inner layer may have a volume resistivity above 10¹² Ω·cm. Such an inner layer is electrically insulating.

The stress controlling material may be elastic. Thus it may elastically follow the cable joint or termination and press against the cable joint or termination, thereby improving the quality of the electrical interface between the tube and the cable.

The stress controlling material may comprise or consist of a polymeric material. In the context of this specification, the term "polymeric material" refers to a material obtainable from a composition based on one or more polymers. The polymeric material may be suitable for being formed by extrusion, molding or injection molding. The polymeric material may also be crosslinkable.

The stress controlling material may comprise an elastomer. In the context of this specification, the term "elastomer" should be understood as referring to a natural or synthetic material that has the chemico-physical properties of natural rubber, such as the ability to undergo major elastic deformations upon stress and to return to their original dimensions when the stress is released.

The stress controlling material may comprise a thermoplastic elastomer. Thermoplastic elastomers are elastic and may be formed into a desired shape using techniques suitable for thermoplastic materials, such as injection moulding and extrusion. Softer materials that compress the underneath layer may have better contact to the underneath layer. In addition, less air may be trapped between the thermoplastic elastomer layer and underneath layer. Air can cause partial discharges, and is preferably avoided in joints. Further, thermoplastic elastomers, as opposed to thermoset elastomers, may be melted and reprocessed several times. Thermoplastic elastomers may also be cross-linked without a need for high temperatures, which might adversely alter other properties of the multilayer tube. As thermoplastic elastomers may be coextruded with the materials of the conducting outer layer and the insulating inner layer, a good contact without boundaries and impurities between the layers may be obtained, and an electrically more durable structure may thereby be obtained.

Thermoplastic elastomers may be considered to include e.g. thermoplastic polyolefins (olefinic thermoplastic elastomers, TPO or TPE-o), styrenic block copolymers (TPE-s), elastomeric alloys (thermoplastic vulcanizates, TPE-v or TPV), thermoplastic polyurethanes (TPU), thermoplastic copolyesters, thermoplastic polyamides, reactor TPO's (R-TPO), polyolefin plastomers (POP), polyolefin elastomers (POE) or any mixtures thereof.

The stress controlling material may comprise a thermoplastic polyolefin, also referred to as olefinic thermoplastic elastomers. Thermoplastic elastomer stress control material may adapt and adjust contacts to the underneath surface better than thermoplastic material, since there may be a constant compression force that compresses the underneath layer. In addition, thermoplastic elastomeric materials may be softer than thermoplastic materials, and therefore may adapt to the underneath surface better than harder materials. Softness of thermoplastic elastomer may be in the range of Shore A 10 - Shore A 90. Olefinic thermoplastic elastomers are blends, i.e. two-component systems consisting of an elastomer (such as ethylene propylene diene monomer rubber, EPDM) finely dispersed in a thermoplastic (co)polymer, such as a polypropylene or a polyethylene. The thermoplastic (co)polymer may be the major component and may also be the continuous phase. Olefinic thermoplastic elastomers may comprise at least 20% (w/w) of elastomer in a thermoplastic polymer.

Thermoplastic vulcanizates are thermoplastic elastomers which have undergone cross-linking. TPVs are elastic and resistant to heat and fatigue.

The stress controlling material may comprise a thermoplastic elastomer material selected from the group consisting of thermoplastic polyolefins and thermoplastic vulcanizates.

The stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm. The volume resistivity may depend e.g. on the voltage of the cable to be connected using the shrinkable multilayer tube.

The stress controlling material may have a relative permittivity of about 18 to about 40, or of about 20 to about 30.

The stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm and a relative permittivity of about 18 to about 40.

The stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm and a relative permittivity of about 20 to about 30.

The stress controlling material may be capable of stress controlling capacitively or resistively; however, the stress controlling mechanism of the material is not particularly limited to these mechanisms. Such materials may comprise or consist of an active agent embedded in a matrix material, such as a thermoplastic elastomer material.

Capacitive stress controlling materials are e.g. materials that have a high relative permittivity. Such materials are capable of reducing the intensity of electric field surrounding joints or terminations. Capacitive stress controlling materials may be provided using a variety of compositions. A capacitive stress controlling material may have a relative permittivity of about 18 to about 40, or of about 20 to about 30 and/or a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm.

Capacitive stress controlling materials may comprise e.g. one or more components selected from the group consisting of carbon black, barium titanate, epihalohydrin polymers, chlorinated polyethylene, ceramics that have high relative permittivity (e.g. above 4), nanoclays, conductive platelets, carbon fibers, graphites, graphenes, fullerenes, carbon nanotubes, and thermoplastic elastomers having high relative permittivity (e.g. above 4).

Capacitive stress controlling materials may comprise or consist of a mixture comprising a thermoplastic elastomer and one or more other components, such as one or more components selected from the group consisting of carbon black, barium titanate, epihalohydrin polymers, chlorinated polyethylene, ceramics that have high relative permittivity (e.g. above 4), nanoclays, conductive platelets, carbon fibers, graphites, graphenes, fullerenes, carbon nanotubes, and thermoplastic elastomers having high relative permittivity (e.g. above 4).

Such a mixture may comprise e.g. 10 to 25 % (v/v) of carbon black. Examples of suitable compositions for the mixture are described e.g. in the Examples of EP 0522760. Properties such as volume resistivity of a stress controlling material comprising carbon black (and other materials having similar properties) do not vary linearly in relation to the relative amount of carbon black due to the phenomenon known as percolation. A stress controlling material comprising or consisting of a mixture comprising a thermoplastic elastomer and carbon black should exhibit suitable percolation properties, thereby providing suitable stress controlling. A skilled person is capable of selecting a mixture having suitable percolation properties.

Epihalohydrin polymers suitable for use in the stress controlling materials are the elastomeric polymers of an epihalohydrin in homopolymer or copolymer form. Such polymers are prepared by polymerization of the monomeric material in mass or in solution with organometallic catalysts, and may be homopolymers, copolymers, terpolymers, etc. Examples of homopolymers include epichlorohydrin, or epibromohydrin; examples of copolymers include copolymers of epihalohydrins with alkylene oxides, and copolymers with epoxides, e.g. propylene oxide, ethylene oxide, butene oxide, and epoxy ethers such as ethylglycidyl ether and allylglycidyl ether.

The conductive platelets may be metal platelets or flakes, such as aluminum platelets.

Resistive stress controlling materials are e.g. materials that have highly nonlinear, voltage controlled electrical transport properties. When the electrical stress reaches the threshold voltage of the material, the conductivity of the material increases similar to voltage-dependent resistor or varistor thereby limiting high electrical stress. The resistive stress control material may comprise microvaristors, small particles that enable current through the material when it applied to sufficient voltage. The microvaristors form a conducting path, allowing reducing the effect of the electric field inside the connector assembly. Resistive stress controlling materials may also be provided using a variety of compositions. A resistive stress controlling material may have a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm.

Resistive stress controlling materials may comprise e.g. one or more components selected from the group consisting of microvaristors, zinc oxide or other semiconductor materials of a metallic oxide material, and silicon carbide or other semiconductive ceramics.

Resistive stress controlling materials may comprise or consist of a mixture comprising a thermoplastic elastomer and one or more other components, such as one or more components selected from the group consisting of microvaristors, zinc oxide or other semiconductor materials of a metallic oxide material, and silicon carbide or other semiconductive ceramics.

The stress controlling material may comprise or consist of a mixture containing a thermoplastic elastomer and one or more other components. In such a mixture, the one or more other components are dispersed in the thermoplastic elastomer. The mixture may be a polymeric mixture. The one or more other components may comprise e.g. one or more components selected from the group consisting of carbon black, barium titanate, epihalohydrin polymers, chlorinated polyethylene, ceramics that have high relative permittivity (e.g. above 4), nanoclays, conductive platelets, carbon fibers, graphites, graphenes, fullerenes, carbon nanotubes, and thermoplastic elastomers having high relative permittivity (e.g. above 4) and/or one or more components selected from the group consisting of microvaristors, zinc oxide or other semiconductor materials of a metallic oxide material, and silicon carbide or other semiconductive ceramics. The one or more other components may also include one or more other polymers to increase the softness, flexibility, toughness, higher shrinkage and/or lower thermal conductivity of the stress controlling material, such as chlorinated polyethylene. The one or more other components may further comprise a crosslinking agent, a photoinitiator, a photosensitizer, a UV resistance agent, a light stabilizer agent, and/or a processing aid.

Starting from a thermoplastic elastomer, such as TPE, TPO or TPV, a skilled person is capable of forming a suitable mixture by adding one or more other components, until suitable properties of the stress controlling material, such as volume resistivity, relative permittivity and/or mechanical properties, are obtained.

The method may also comprise expanding the multilayer tube. The multilayer tube may be expanded after coextruding e.g. by passing it through a passage having an annular cross-section and by simultaneously applying a positive pressure within the tube.

The method may subsequently comprise cutting the multilayer tube to size.

Also disclosed is a shrinkable multilayer tube obtainable by one or more embodiments of the method.

The embodiments described hereinbefore may be used in any combination with each other. Several of the embodiments may be combined together to form a further embodiment. A product or a method may comprise at least one of the embodiments described hereinbefore.

A technical effect of one or more embodiments described in this specification is that the shrinkable multilayer tube is simple and easy to install.

A technical effect of one or more embodiments described in this specification is that the shrinkable multilayer tube is electrically more durable.

A technical effect of one or more embodiments described in this specification is that the shrinkable multilayer tube may improve the quality of the electrical interface between the tube and a cable to be connected.

A technical effect of one or more embodiments described in this specification is that the method for manufacturing the shrinkable multilayer tube is simple and cost-effective.

A technical effect of one or more embodiments described in this specification is that as the innermost layer has a stress controlling effect, the adverse effects of omitting other stress controlling material such as a stress controlling mastic from the cable joint or termination are mitigated.

One aspect discloses a shrinkable multilayer tube for electrically connecting or terminating cables, comprising a conducting outer layer; an insulating inner layer arranged con-centrically within the conducting outer layer; and an innermost layer arranged concentrically within the insulating layer; wherein the innermost layer is formed of a stress controlling material. In one embodiment the tube is obtainable by coextrusion of the conducting outer layer, the insulating inner layer and the innermost layer into a multilayer structure. In an embodiment the shrinkable multilayer tube is heat shrinkable or cold shrinkable. In an embodiment the stress controlling material comprises a thermoplastic elastomer. In an embodiment the stress controlling material has a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm. In an embodiment the stress controlling material has a relative permittivity of about 18 to about 40, or about 20 to about 30. In an embodiment the stress controlling material comprises or consists of a mixture containing a thermoplastic elastomer and one or more other components selected from the group consisting of carbon black, barium titanate, epihalohydrin polymers, chlorinated polyethylene, ceramics that have high relative permittivity, nanoclays, conductive platelets, carbon fibers, graphites, graphenes, fullerenes, carbon nanotubes, and thermoplastic elastomers having high relative permittivity and/or one or more components selected from the group consisting of microvaristors, zinc oxide or other semiconductor materials of a metallic oxide material, and silicon carbide or other semiconductive ceramics.

One aspect discloses a cable connector assembly for electrically connecting cables comprising a shrinkable multilayer tube described hereinbefore.

One aspect discloses a method for producing the shrinkable multilayer tube described hereinbefore, the method comprising coextruding a conducting outer layer, an insulating inner layer and an innermost layer of a stress controlling material into a multilayer tube, wherein arranging the insulating inner layer concentrically within the conducting outer layer and the innermost layer concentrically within the insulating inner layer. In an embodiment the multilayer tube is heat shrinkable or cold shrinkable. In an embodiment the stress controlling material comprises a thermoplastic elastomer. In an embodiment stress controlling material has a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm. In an embodiment the stress controlling material has a relative permittivity of about 18 to about 40, or about 20 to about 30. In an embodiment the stress controlling material comprises or consists of a mixture containing a thermoplastic elastomer and one or more other components selected from the group consisting of carbon black, barium titanate, epihalohydrin polymers, chlorinated polyethylene, ceramics that have high relative permittivity, nanoclays, conductive platelets, carbon fibers, graphites, graphenes, fullerenes, carbon nanotubes, and thermoplastic elastomers having high relative permittivity and/or one or more components selected from the group consisting of microvaristors, zinc oxide or other semiconductor materials of a metallic oxide material, and silicon carbide or other semiconductive ceramics. In an embodiment the method comprises cross-linking the material of at least one of the layers and expanding the tube.

Reference will now be made in detail to the embodiments of the present invention, an example of which is illustrated in the accompanying drawing.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

For reasons of simplicity, item numbers will be maintained in the following exemplary embodiments in the case of repeating components.

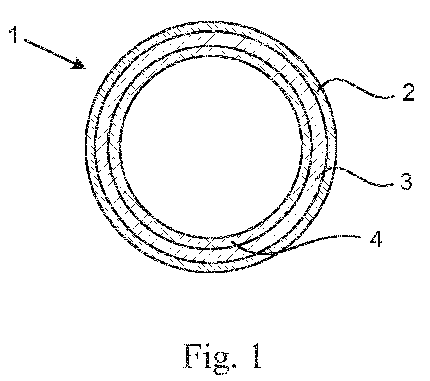

Figure 1 illustrates a cross-section of a shrinkable multilayer tube 1 according to one embodiment. A conducting outer layer 2 comprises a thermoplastic material, such as a blend or mixture of polyethylene, ethyl vinyl acetate and conductive carbon black in an amount that renders the material electrically conducting. The conducting outer layer 2 surrounds an insulating inner layer 3. The insulating inner layer 3 may also comprise a thermoplastic material similar to the material of the conducting outer layer, such as a blend or mixture of polyethylene, ethyl vinyl acetate, a filler and optionally a colouring agent. The insulating inner layer 3 surrounds an innermost layer 4, which comprises a stress controlling material, such as a thermoplastic elastomer (e.g. TPO, TPE or TPV) mixed with conductive carbon black and optionally another polymer for softening the stress controlling material. The conductive carbon black may, alternatively, be replaced by any other material imparting capacitative or resistive stress controlling properties described in this specification. The stress controlling material has a volume resistivity of 10⁹ to 10¹³ Ω·cm and a relative permittivity of about 20 to about 30.

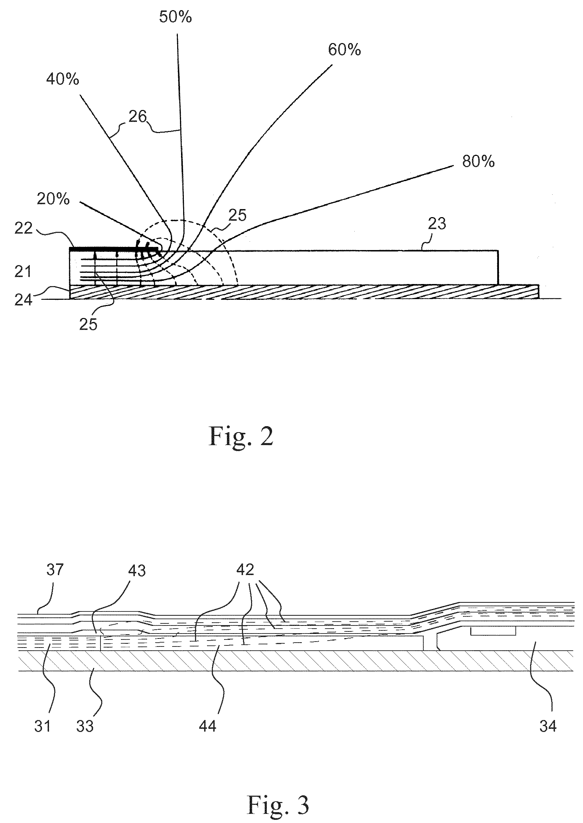

Figure 2 is a cross section of a cable 21, illustrating an enhanced electric field. The cable 21 comprises an outer sheath 22, insulating layer 23 and a conductor 24. In this example the outer sheath 22 has been removed, exposing a portion of the insulating layer 23 and the conductor 24. The electric field is illustrated by electric flux lines 25 and the equipotential lines 26 illustrating the strength of the electric field between the conductor 24 and the outer sheath 22. Figure 2 illustrates the effect of the electric field bending without the protection from the outer sheath 22. The cable 21 may be a medium or high voltage cable. The electric flux lines 25 follow perpendicularly the equipotential lines 26. For the portion where the cable outer sheath 22 is removed, the equipotential lines bend outside the cable 21 illustrating the discontinuity in the shield and an enhanced electric field. This could lead to arcing if another object is present at the area of equipotential lines 26, causing a potentially hazardous situation.

Figure 3 shows one embodiment of a portion of a connector assembly and the electric field in a medium to high voltage cable. The cross-sectional view illustrates the top half of one side of the connector assembly. The conductor 33 and the outer sheath 31 of the electric cable are connected to the joint 34. The multilayer tube 37 is shrunk around the connector assembly. The electric field lines 42 are illustrated as dashed line. The electric field strength is highest near the conductor 33, gradually reducing near to the surface of the multilayer tube 37. In the portion where the outer sheath 31 is correctly positioned around the conductor 33, the electric field lines 42 are controllably inside the outer sheath. The mastic material 43 and the mastic tape are the innermost protecting elements around the conductor 33 in the connector assembly. The electric field lines extend outwards in a portion where the mastic material 43 is used to cover the edge of the cable sheath 31. The multilayer tube 37 controls the electric field 44, containing the electric field inside the connector assembly.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A shrinkable multilayer tube (1) for electrically connecting or terminating cables, comprising
a conducting outer layer (2);
an insulating inner layer (3) arranged concentrically within the conducting outer layer; and
an innermost layer (4) arranged concentrically within the insulating layer;
wherein the innermost layer (4) is formed of a stress controlling material.

2. The shrinkable multilayer tube according to claim 1, wherein the tube (1) is obtainable by coextrusion of the conducting outer layer (2), the insulating inner layer (3) and the innermost layer (4) into a multilayer structure.

3. The shrinkable multilayer tube according to claim 1 or 2, wherein the shrinkable multilayer tube (1) is heat shrinkable or cold shrinkable.

4. The shrinkable multilayer tube according to any one of claims 1 - 3, wherein the stress controlling material comprises a thermoplastic elastomer.

5. The shrinkable multilayer tube according to any one of claims 1 - 4, wherein the stress controlling material has a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm.

6. The shrinkable multilayer tube according to any one of claims 1 - 5, wherein the stress controlling material has a relative permittivity of about 18 to about 40, or about 20 to about 30.

7. The shrinkable multilayer tube according to any one of claims 1 - 6, wherein the stress controlling material comprises or consists of a mixture containing a thermoplastic elastomer and one or more other components selected from the group consisting of carbon black, barium titanate, epihalohydrin polymers, chlorinated polyethylene, ceramics that have high relative permittivity, nanoclays, conductive platelets, carbon fibers, graphites, graphenes, fullerenes, carbon nanotubes, and thermoplastic elastomers having high relative permittivity and/or one or more components selected from the group consisting of microvaristors, zinc oxide or other semiconductor materials of a metallic oxide material, and silicon carbide or other semiconductive ceramics.

8. A cable connector assembly for electrically connecting cables comprising a shrinkable multilayer tube (1) according to any one of claims 1 - 7.

9. A method for producing the shrinkable multilayer tube (1) according to any one of claims 1 - 7, comprising coextruding a conducting outer layer (2), an insulating inner layer (3) and an innermost layer (4) of a stress controlling material into a multilayer tube, wherein arranging the insulating inner layer (3) concentrically within the conducting outer layer (2) and the innermost layer (4) concentrically within the insulating inner layer.

10. The method according to claim 9, wherein the multilayer tube (1) is heat shrinkable or cold shrinkable.

11. The method according to claim 9 or 10, wherein the stress controlling material comprises a thermoplastic elastomer.

12. The method according to any one of claims 9 - 11, wherein the stress controlling material has a volume resistivity of 10⁹ to 5×10¹³, or 10¹¹ to 5×10¹³, or 10¹⁰ to 10¹³, or 10⁹ to 10¹² Ω·cm, or 10¹¹ to 10¹² Ω·cm.

13. The method according to any one of claims 9 - 12, wherein the stress controlling material has a relative permittivity of about 18 to about 40, or about 20 to about 30.

14. The method according to any one of claims 9 - 13, wherein the stress controlling material comprises or consists of a mixture containing a thermoplastic elastomer and one or more other components selected from the group consisting of carbon black, barium titanate, epihalohydrin polymers, chlorinated polyethylene, ceramics that have high relative permittivity, nanoclays, conductive platelets, carbon fibers, graphites, graphenes, fullerenes, carbon nanotubes, and thermoplastic elastomers having high relative permittivity and/or one or more components selected from the group consisting of microvaristors, zinc oxide or other semiconductor materials of a metallic oxide material, and silicon carbide or other semiconductive ceramics.

15. The method according to any one of claims 9 - 14, wherein the method comprises cross-linking the material of at least one of the layers (2, 3, 4) and expanding the tube (1).
